# EUROPÄISCHE PATENTANMELDUNG

(11) **EP 1 013 962 A2**
(43) Veröffentlichungstag der Anmeldung: **28.06.2000**
(21) Anmeldenummer: 99119794.8
(22) Anmeldetag: 06.10.1999
(51) Int. Cl.: F16F 7/10

(54) **Aktiver Schwingungstilger**

(30) Priorität: 23.12.1998 DE 19859701
(71) Anmelder: Carl Freudenberg, 69469 Weinheim (DE)
(72) Erfinder: Diekmann, Hans-Jürgen, 30159 Hannover (DE); Feurer, Georg, 69493 Hirschberg (DE); Eckel, Hans-Gerd, Dr., 69514 Laudenbach (DE)

(57) **Zusammenfassung**

Aktiver Schwingungstilger für Maschinenteile mit schwingender translatorischer Bewegung, mit einer in Bewegungsrichtung über eine Tauchspule von einer die Schwingungsfrequenzen regelnden Steuereinheit aktivierten Trägheitsmasse, bei dem die Tauchspulen-Halterung mit der Trägheitsmasse über der Magnetkraft entgegenwirkende Federelemente verbunden ist, wobei die Tauchspule (4), die Trägheitsmasse (5) und die Steuereinheit (11) für die Regelung des Tilgers (1) als Modul ausgebildet von einem Gehäuse (9) eingefaßt sind.

## Beschreibung

### Technisches Gebiet

Schwingungstilger werden sowohl zur Dämpfung von Torsionsschwingungen als auch zur Dämpfung von Schwingungen aus translatorischen Bewegungen eingesetzt. Dabei kommen sowohl passive als auch aktive Schwingungstilger zur Anwendung. Passive Tilger eignen sich zur Dämpfung einer einzelnen Schwingungsfrequenz. Aktive Schwingungstilger können dagegen zur Dämpfung von Schwingungen in einem großen Frequenzbereich eingesetzt werden. Die vorliegende Erfindung behandelt einen aktiven Schwingungstilger zur Dämpfung von translatorischen Bewegungen.

### Stand der Technik

In der DE PS 43 01 845 wird ein aktiver Schwingungstilger für ein in einer hin- und hergehenden Bewegung befindliches Maschinenteil behandelt. Die Trägheitsmassen können in eine hin- und hergehende Bewegung versetzt werden, so daß eingeleitete Schwingungen aktiv reduziert werden. Bei dem bekannten Tilger wird die Trägheitsmasse durch eine Tauchspule in Bewegung gesetzt und durch Federelemente in ihre Ruhestellung zurückgedrückt. Die Trägheitsmasse wird durch einen Topfmagnet gebildet, welcher die Tauchspule radial innen und außen zumindest teilweise konzentrisch umschließt. Der Topfmagnet wird durch eine Führung parallel zur Achse der Tauchspule geführt. Der Schwingungstilger kann gezielt zu Schwingungen angeregt werden, um die Schwingungen im angrenzenden Maschinenbauteil hinsichtlich ihrer Frequenz und Schwingungsstärke in gewünschter Weise zu verändern. Bei Einleitung eines Wechselstroms in die Tauchspule wird eine Kraft zwischen dem Topfmagnet und dem Maschinenteil erzeugt, welche die Bewegungen der Trägheitsmasse auslöst. Der hierzu erforderliche Wechselstrom wird der Tauchspule über eine Steuereinheit zugeführt, die unter Zuhilfenahme von Beschleunigungssensoren entsprechend geregelt werden kann.

In der DE PS 43 40 034 ist eine für den soeben geschilderten Schwingungstilger einsetzbare Steuereinheit ausführlich behandelt. Die Einheit enthält im wesentlichen eine Ansteuerung, die mit einem ersten Signalgeber des schwingenden Maschinenteils verbunden ist, einen Signalgenerator, eine Kennfeld-Steuerung und einen Leistungsverstärker.

Die DE OS 196 05 551 zeigt eine Ausführungsform des Schwingungstilgers mit eingefügtem Sensor am Auflager des Schwingungsdämpfers. Die Steuereinheit zur Regelung der Schwingungen der Tilgermasse ist hier nicht näher behandelt. Sie befindet sich, wie übrigens auch bei dem voranstehend geschilderten Schwingungstilger, in einer Aufnahmebox an der Maschine, in der das zu dämpfende Maschinenteil mit Schwingungstilger angeordnet ist. Von Nachteil hierbei ist, daß der Schwingungstilger mit relativ langen Leitungen mit der Steuereinheit verbunden werden muß. Die von dem durch die Leitungen fließenden elektrischen Strom ausgehenden elektromagnetischen Wellen können sich störend auf andere Geräte zum Beispiel Radioempfang auswirken.

Außerdem entstehen erhebliche Leitungsverluste zwischen der Steuereinheit und dem Schwingungstilger.

Der Erfindung liegt die Aufgabe zugrunde, hier Abhilfe zu schaffen. Dabei soll eine möglichst geringe Anzahl von Kabel und Kabelverbindungen zum Einsatz kommen. Darüberhinaus soll eine möglichst kostengünstige Ausführungsform gefunden werden.

### Darstellung der Erfindung

Die Lösung der gestellten Aufgabe erfolgt bei einem aktiven Schwingungstilger für Maschinenteile mit schwingender translatorischer Bewegung mit einer in Bewegungsrichtung über eine Tauchspule von einer die Schwingungsfrequenzen regelnden Steuereinheit aktivierten Trägheitsmasse, bei dem die Tauchspulenhalterung mit der Trägheitsmasse über der Magnetkraft entgegenwirkende Federelemente verbunden ist, erfindungsgemäß dadurch, daß die Tauchspule, die Trägheitsmasse und die Steuereinheit für die Regelung des Tilgers als Modul ausgebildet und von einem Gehäuse eingefaßt sind. Durch diese Anordnung der einzelnen Teile zueinander wird eine äußerst kompakte Bauweise des Schwingungsdämpfers erreicht und die Steuereinheit in den Schwingungstilger integriert. Die spätere Montage von Tilger und Steuereinheit wird deutlich vereinfacht. Insbesondere aber ergeben sich bezüglich der elektromagnetischen Verträglichkeit erhebliche Verbesserungen, da die aufwendige Verkabelung außerhalb des Schwingungstilgers entfällt. Kostensparend wirkt sich aus, daß ein gesondertes Gehäuse für die Steuereinheit nicht mehr gebraucht wird.

Verschiedene Ausführungsformen des grundsätzlichen Erfindungsgedankens sind möglich. Eine günstige Ausführungsform sieht vor, daß die Trägheitsmasse aus einem Permanentmagneten mit angefügtem Eisenkreis besteht, wobei der Eisenkreis die Tauchspule radial innen und außen zumindest teilweise umschließt. Diese Ausführungsform ist an sich bekannt, sie hat sich jedoch in der Praxis bewährt und kann deshalb auch im Rahmen der vorliegenden Erfindung zur Ausführung gelangen.

Die Unterbringung der Steuereinheit im Gehäuse kann auf unterschiedliche Weise erfolgen. So kann beispielsweise die Steuereinheit am Gehäusedeckel angeordnet werden, so daß sie sich dann zwischen dem Gehäusedeckel und der Trägheitsmasse befindet. Ihr Abstand zur Trägheitsmasse ist selbstverständlich so zu wählen, daß die Trägheitsmasse auch bei stärkstem Ausschlag die Steuereinheit nicht berührt.

Um die Bauhöhe des Schwingungstilgers in axialer Richtung jedoch so gering wie möglich zu halten, ist es günstig, wenn die Steuereinheit mindestens teilweise in einen in der Trägheitsmasse zu bildenden Innenraum eingesetzt ist. Dieser Innenraum kann durch eine Bohrung im Eisenkreis erreicht werden. Bei Schwingungstilgern größerer Abmessungen kann die gesamte Steuereinheit in den Innenraum eingefügt werden. Bei kleineren Schwingungstilgern reicht eventuell der Innenraum nicht aus, so daß auch zumindest Teile der Steuereinheit in Freiräumen an anderen Stellen unterzubringen sind. Diese können in axialer Richtung gesehen beidseitig des Innenraums vorhanden sein. Die Steuereinheit ist dann in mehrere Einzelteile aufzuteilen.

Möglich ist eine Ausführungform bei der die Steuereinheit über schwingungsdämpfende Elemente mit dem Gehäuse verbunden ist. Die einzelnen Komponenten der Steuereinheit werden hierdurch vor allzustarken Erschütterungen geschützt. Dabei ist zu beachten, daß der signalgebende Beschleunigungssensor bei dieser Anordnung am schwingenden Maschinenteil verbleiben muß. In dem Fall jedoch, wenn die Steuereinheit starr mit dem Gehäuse verbunden ist, kann der Beschleunigungssensor mit der Steuereinheit verbunden sein.

Durch die Integrierung von Schwingungstilger und Steuereinheit und ihrer Einbringung in einem Gehäuse eröffnen sich neue Ausgestaltungsmöglichkeiten für die Steuereinheit. So kann die Steuereinheit mit Sensoren zur Erfassung physikalischer gehäuseinterner Größen ausgestattet werden, welche in den Regelkreis einbezogen zu einer stabileren Regelung des Schwingungsdämpfers führen.
Zum Beispiel kann über ein Temperatursensor die während des Betriebs sich ergebende erhöhte Temperatur einbezogen werden. Schließlich kann ein Abgleich der Elektronik bei einem Probelauf des Schwingungstilgers durchgeführt werden. Hierbei können auch die mechanischen Eigenschaften des Tilgers über entsprechende Ausgestaltung des Regelkreises miteinbezogen werden. Die gesamte Applikation des Schwingungstilgers wird vereinfacht. Es ergibt sich schließlich auch eine Konstanz der Funktion des Schwingungstilgers über dessen gesamte Lebensdauer.

In weiterer Ausgestaltung des Erfindungsgedankens kann das Gehäuse aus besonderem Material zur Abschirmung von elektromagnetischen Feldern hergestellt sein. Dieses ist im Hinblick auf die elektromagnetische Verträglichkeit von Nutzen.

Im Hinblick auf mögliche höhere Temperaturen kann das Gehäuse in seinem Inneren und/oder die Steuereinheit mit wärmeleitenden Einbauten zur Ableitung der Wärme versehen werden. Zusätzlich hierzu oder auch allein können in die Gehäusewandung Luftdurchlass-Öffnungen eingebracht sein.

### Ausführung der Erfindung

Anhand eines Ausführungsbeispiels wird die Erfindung näher erläutert.

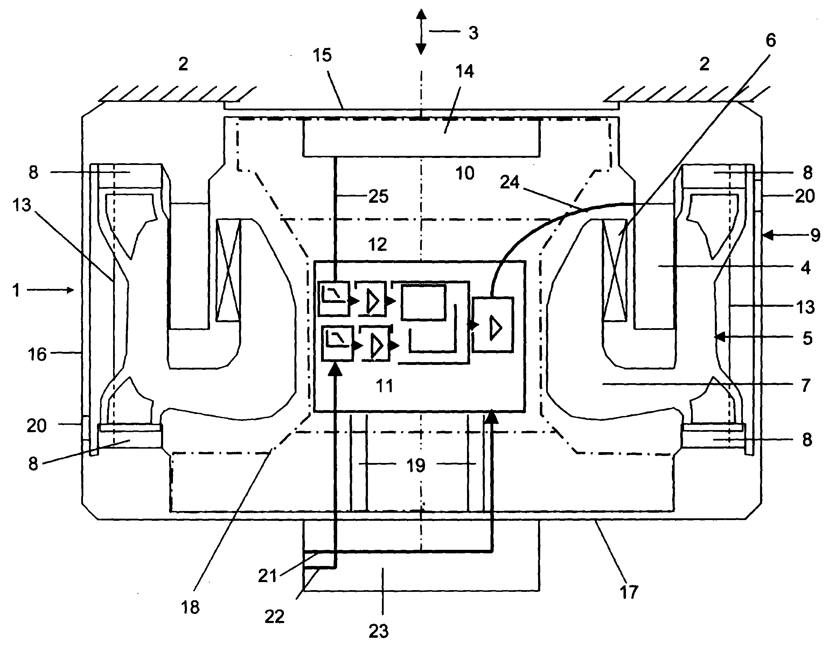

Die Figur zeigt einen aktiven Schwingungstilger 1, der an einem nicht näher gezeigten oberhalb des Schwingungstilgers 1 liegenden Maschinenteil 2 befestigt wird. Das Maschinenteil 2 führt eine schwingende translatorische Bewegung in Achsrichtung des Schwingungstilgers 1 aus, wie mit dem Doppelpfeil 3 angezeigt. Der Schwingungstilger 1 kann an sehr unterschiedliche schwingende Maschinenteile 2 angebracht werden.

Die Tauchspule 4, die Trägheitsmasse 5 und die Steuereinheit 11 sind von dem Gehäuse 9 eingefaßt. Das Gehäuse 9 ist vorzugsweise von zylindrischer Form und wird über die Senkschrauben 13 mit dem Maschinenteil 2 verschraubt.

Die Trägheitsmasse 5 wird durch den Eisenkreis 7 und den daran befestigten Permanentmagneten 6 gebildet. Über die Federelemente 8 ist die Trägheitsmasse 5 mit dem Gehäuse 9 verbunden. Die detaillierte Ausbildung und Anordnung der Federelemente 8 kann der DE OS 196 05 551 entnommen werden. Insoweit wird auf die genannte OS Bezug genommen. Die Spulen 4 und der Beschleunigungssensor 14 sind an der oberen Abschlußplatte 15 des Gehäuses 9 befestigt. Die Abschlußplatte 15 ist Bestandteil des Gehäuses 9 oder fest mit dem Gehäuse 9 verbunden.

Die Tauchspule 4 wird von dem Eisenkreis 7 mit dem Permanentmagneten 6 umfaßt und je nach Richtung und Stärke des in die Tauchspule eingehenden Wechselstroms wird der Eisenkreis 7 parallel zur Achsrichtung linear hin- und herbewegt. Das Gehäuse 9 besteht aus dem Gehäusemantel 16 und den beiden Abschlußblechen 15 und 17. Der Mantel 16 und das Abschlußblech 17 sind zu einem Gehäusetopf zusammengefaßt, der über die Befestigungsschrauben 13 am Abschlußblech 15 und darüberhinaus am Maschinenteil 2 gehalten wird. Durch die strichpunktierten Linien 18 wird die Begrenzung des gesamten Innenraums 10 angezeigt, der für die Unterbringung der Steuereinheit 11 im Schwingungstilger 1 zur Verfügung steht. Im Ausführungsbeispiel ist der zentrale Innenraum 12, der innerhalb der Trägheitsmasse 5 liegt, mit der Steuereinheit 11 ausgefüllt. Die weiteren Freiräume, auf der Figur gesehen ober- und unterhalb der Steuereinheit 11, können für Teile der Steuereinheit genutzt werden, welche mit zusätzlichen Komponenten für den Regelkreis ausgestattet sind.

Die Steuereinheit 11 ist über die angedeuteten schwingungsdämpfenden Elemente 19 mit dem Abschlußblech 17 verbunden. Zur Wärmeabführung sind die Öffnungen 20 im Gehäusemantel 16 eingebracht.

Der Schwingungstilger 1 ist lediglich mit den Anschlüssen für die Spannungsversorgung 21 und die Drehzahlvorgabe 22 versehen, so daß nur ein einziger Steckanschluß 23 erforderlich ist. Die Verbindung zwischen Steuereinheit 11 und Tauchspule 4 erfolgt über lediglich zwei Leitungen 24, die im Hinblick auf den Abstand der genannten Teile zueinander äußerst kurz gehalten werden können und damit eine geringsmögliche Wärmeentstehung verursachen. Die Verbindung von Sensor 14 mit der Steuereinheit 11 erfolgt über das Kabel 25.

## Patentansprüche

1. Aktiver Schwingungstilger für Maschinenteile mit schwingender translatorischer Bewegung, mit einer in Bewegungsrichtung über eine Tauchspule von einer die Schwingungsfrequenzen regelnden Steuereinheit aktivierten Trägheitsmasse, bei dem die Tauchspulen-Halterung mit der Trägheitsmasse über der Magnetkraft entgegenwirkende Federelemente verbunden ist, **dadurch gekennzeichnet,** daß die Tauchspule (4), die Trägheitsmasse (5) und die Steuereinheit (11) für die Regelung des Tilgers (1) als Modul ausgebildet von einem Gehäuse (9) eingefaßt sind.

2. Aktiver Schwingungstilger nach Anspruch 1, dadurch gekennzeichnet, daß die Trägheitsmasse (5) aus einem Permanentmagneten (6) mit angefügtem Eisenkreis (7) besteht, welcher die Tauchspule (4) radial innen und außen zumindest teilweise umschließt.

3. Aktiver Schwingungstilger nach Anpruch 1 oder 2, dadurch gekennzeichnet, daß die Steuereinheit (11) im Gehäusetopf zwischen Gehäusedeckel (17) und Trägheitsmasse (5) angeordnet ist.

4. Aktiver Schwingungstilger nach Anspruch 1 oder 2, dadurch gekennzeichnet, daß innerhalb der Trägheitsmasse (5) ein Innenraum (10) gebildet ist, in dem die Steuereinheit (11) mindestens teilweise eingesetzt ist.

5. Aktiver Schwingungstilger nach einem der Ansprüche 1 bis 4, dadurch gekennzeichnet, daß die Steuereinheit (11) über schwingungsdämpfende Elemente (19) mit dem Gehäuse (9) verbunden ist.

6. Aktiver Schwingungstilger nach einem der Ansprüche 1 bis 4, dadurch gekennzeichnet, daß die Steuereinheit (11) starr mit dem Gehäuse (9) verbunden ist und einen integrierten Beschleunigungssensor (14) aufweist.

7. Aktiver Schwingungstilger nach einem der Ansprüche 1 bis 6, dadurch gekennzeichnet, daß die Steuereinheit (11) mit Sensoren zur Erfassung physikalischer gehäuseinterner Größen, insbesondere Temperatur ausgestattet ist.

8. Aktiver Schwingungstilger nach einem der Ansprüche 1 bis 7, dadurch gekennzeichnet, daß das Gehäuse (9) aus besonderem Material zur Abschirmung von elektromagnetischen Feldern hergestellt ist.

9. Aktiver Schwingungstilger nach einem der Ansprüche 1 bis 8, dadurch gekennzeichnet, daß das Gehäuse (9) in seinem Inneren und/oder die Steuereinheit (11) mit wärmeleitenden Einbauten zur Ableitung der Wärme versehen ist.

10. Aktiver Schwingungstilger nach Ansprüchen 1 bis 9, dadurch gekennzeichnet, daß die Gehäusewandung (16, 17) mit Luftdurchlaßöffnungen (20) versehen ist.
